# EUROPEAN PATENT APPLICATION

(11) **EP 4 625 509 A1**
(43) Date of publication of application: **01.10.2025**
(21) Application number: 25165324.2
(22) Date of filing: 21.03.2025
(51) Int. Cl.: H01M 4/04, H01M 4/1391, H01M 4/02, H01M 50/609, H01M 10/0525

(54) **APPARATUS AND METHOD FOR MANUFACTURING ELECTRODE AND SECONDARY BATTERY**

(30) Priority: 25.03.2024 KR 20240040425; 24.04.2024 KR 20240054413
(71) Applicant: SAMSUNG SDI CO., LTD., Yongin-si, Gyeonggi-do 17084 (KR)
(72) Inventor: Kim, Da Hyun, 16678 Suwon-si, Gyeonggi-do (KR); Park, So Yeon, 16678 Suwon-si, Gyeonggi-do (KR); Yoo, Dae Yeol, 16678 Suwon-si, Gyeonggi-do (KR)
(74) Representative: Gulde & Partner

(57) **Abstract**

Disclosed are an apparatus and method for manufacturing an electrode and a secondary battery including the electrode. The electrode manufacturing apparatus includes a press roll having a surface roughness Ra of 0.25 µm or more, with the press roll being configured to roll an electrode sheet.

## Description

### Field of the Disclosure

The present disclosure relates to an electrode manufacturing apparatus, an electrode manufacturing method, and a secondary battery including an electrode manufactured thereby.

### Description of the Related Art

In recent years, demand for high energy density and high-capacity secondary batteries has grown rapidly with rapid spread of electronic devices using batteries, such as mobile phones, notebook computers, and electric vehicles. Thus, research and development has been actively carried out to improve lithium secondary batteries.

A lithium secondary battery includes a cathode and an anode, which contain active materials allowing intercalation and deintercalation of lithium ions, and an electrolyte. The battery produces electricity through oxidation and reduction upon intercalation/deintercalation of lithium ions in the cathode and the anode.

The cathode and/or the anode included in the secondary battery may be referred to as an "electrode". In addition, a base on which an active material layer is disposed may be referred to as an electrode sheet. The electrode sheet is rolled to secure the active material layer on the base while improving impregnability and current delivery.

A device that performs rolling on the electrode sheet may be referred to as a "press roll". The press roll is conventionally arranged as a pair of press rolls. A press roll rolls the electrode sheet by applying force to the electrode sheet passing between the pair of press rolls.

Surface roughness of the press roll determines surface roughness of the electrode sheet subjected to rolling. The surface roughness of the electrode sheet affects impregnability and/or a degree of salt precipitation of an electrode. Therefore, in to properly control the surface roughness of the electrode sheet, it is necessary to control the surface roughness of the press roll.

This section is intended only to provide a better understanding of the background of the disclosure and thus may include information that is not necessarily prior art.

### Summary of the Disclosure

The invention is defined by the appended claims. The description that follows is subjected to this limitation. Any disclosure lying outside the scope of said claims is only intended for illustrative as well as comparative purposes.

It is one aspect of the present disclosure to provide an electrode manufacturing apparatus including a press roll having high surface roughness.

It is another aspect of the present disclosure to provide an electrode with high surface roughness.

It is another aspect of the present disclosure to provide an electrode having a pattern formed thereon.

The above and other aspects and features of the present disclosure will become apparent from the following description of embodiments of the present disclosure.

In accordance with one aspect of the present disclosure, an electrode manufacturing apparatus includes a press roll having a surface roughness Ra of 0.25 µm or more, with the press roll being configured to roll an electrode sheet.

In accordance with another aspect of the present disclosure, an electrode manufacturing method includes rolling an electrode sheet through a press roll having a surface roughness Ra of 0.25 µm or more.

In accordance with a further aspect of the present disclosure, a secondary battery includes an electrode manufactured by the electrode manufacturing method ; an electrode assembly including an electrode; and a case receiving the electrode assembly therein.

An embodiment may provide an electrode manufacturing apparatus including a press roll having high surface roughness at a low driving distance and an electrode manufacturing method. For example, an embodiment may provide an electrode manufacturing apparatus, which includes the press roll with high surface roughness even after the press roll has been replaced, and an electrode manufacturing method.

An embodiment may provide an electrode manufacturing apparatus and an electrode control method that does not require control of an impregnation time of an electrode rolled by a press roll having a low driving distance.

An embodiment reduces process time required to manufacture an electrode.

An embodiment provides an electrode having a small salt precipitation area when the electrode is rolled by press rolls having a short driving distance.

An embodiment provides an electrode with a pattern formed on a surface thereof.

However, aspects and features of the disclosure are not limited to those described above and other aspects and features not mentioned will be clearly understood by those skilled in the art from the detailed description given below.

### Brief Description of the Drawings

The drawings attached to this specification illustrate embodiments of the present disclosure, and further describe aspects and features of the present disclosure together with the detailed description of the present disclosure. The present disclosure is not limited to the embodiments depicted in the drawings.
FIG. 1 to FIG. 4 are schematic cross-sectional views of lithium secondary batteries according to embodiments of the present disclosure;
FIG. 5 is a schematic view of an electrode manufacturing apparatus according to an embodiment of the present disclosure;
FIG. 6 is views showing conventional electrode manufacturing apparatuses and surfaces of electrodes manufactured thereby;
FIG. 7 is a flowchart illustrating an electrode manufacturing method according to an embodiment of the present disclosure;
FIG. 8A and FIG. 8B are graphs depicting surface roughness (Ra, Rz) of press rolls and electrodes for a conventional electrode manufacturing apparatus and an electrode manufacturing apparatus according to an embodiment of the present disclosure;
FIG. 9A and FIG. 9B are pictures showing surfaces of a conventional electrode plate and an electrode plate according to an embodiment of the present disclosure, which have similar surface roughness; and
FIG. 10 is a table comparing performance of a conventional electrode manufacturing apparatus and an electrode manufacturing apparatus according to an embodiment of the present disclosure.

### Detailed Description of the Disclosure

Hereinafter, exemplary embodiments of the present disclosure will be described in detail with reference to the accompanying drawings. However, the following embodiments are provided by way of illustration and the present disclosure is not limited to the illustrated embodiments.

When an element is referred to as being disposed (or located or positioned) "above" (or "below") or "on" (or "under") a component, it may mean that the element is placed in contact with the upper (or lower) surface of the component and may also mean that another component may be interposed between the component and any element disposed (or located or positioned) on (or under) the component.

Throughout the specification, unless specified otherwise, each element may be singular or plural. In addition, throughout the specification, when "A and/or B" is stated, it means A, B or A and B, unless specified otherwise.

As used herein, "combinations thereof" may refer to mixtures, stacks, composites, copolymers, alloys, blends, and reaction products of components.

Unless otherwise defined herein, particle diameter may refer to an average particle diameter. In addition, the particle diameter means an average particle diameter (D50) that refers to a particle diameter corresponding to 50% by volume in a volume cumulative distribution of particles. The average particle diameter may be measured by any method well known in the art, for example, by a particle size analyzer, a transmission electron microscope image or a scanning electron microscope image. Alternatively, the average particle diameter (D50) may be measured by counting the number of particles in each particle diameter range using a device employing a dynamic light-scattering method to analyze data, followed by calculating the average particle diameter (D50) based on the analyzed data. Alternatively, the average particle diameter (D50) may be measured by laser diffraction. More specifically, in measurement by laser diffraction, target particles are dispersed in a dispersant, introduced into a commercially available laser diffraction particle analyzer (for example, Microtrac MT 3000), and irradiated with ultrasound waves of about 28 kHz at a power of 60 W, followed by calculating the average particle size (D50) corresponding to 50 vol% by volume in the cumulative volume distribution of the particles in the measurement device.

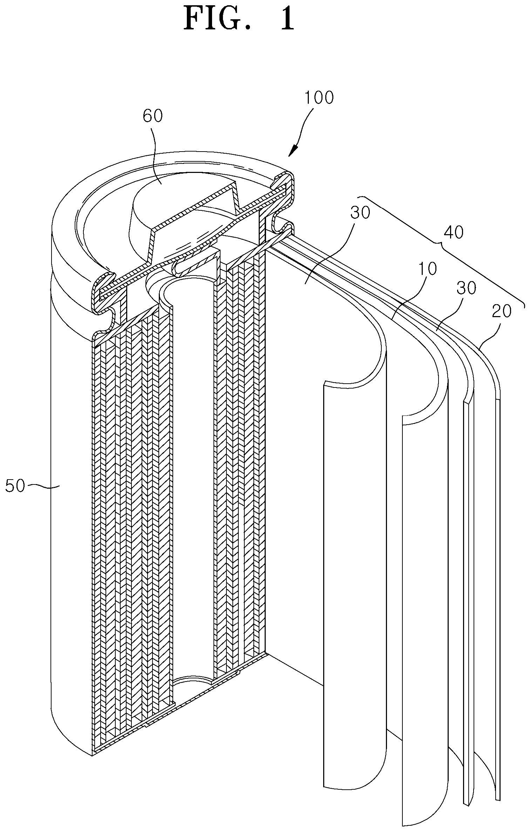

FIG. 1 to FIG. 4 are schematic cross-sectional views of lithium secondary batteries according to embodiments of the present disclosure.

### Lithium secondary battery

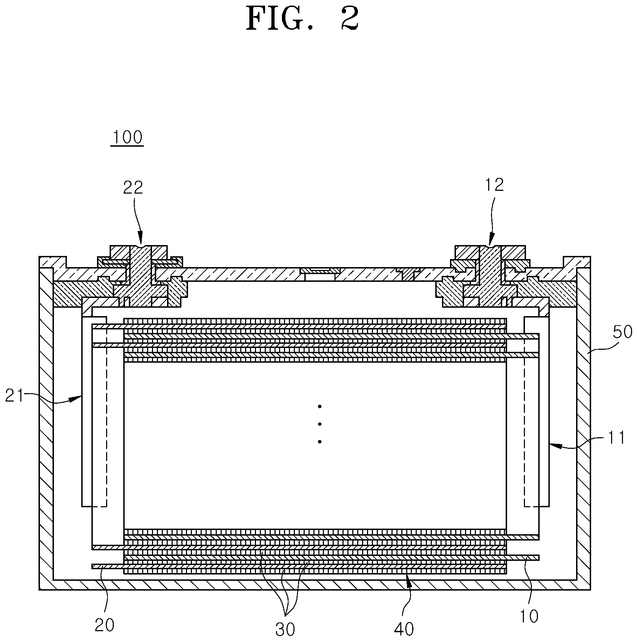

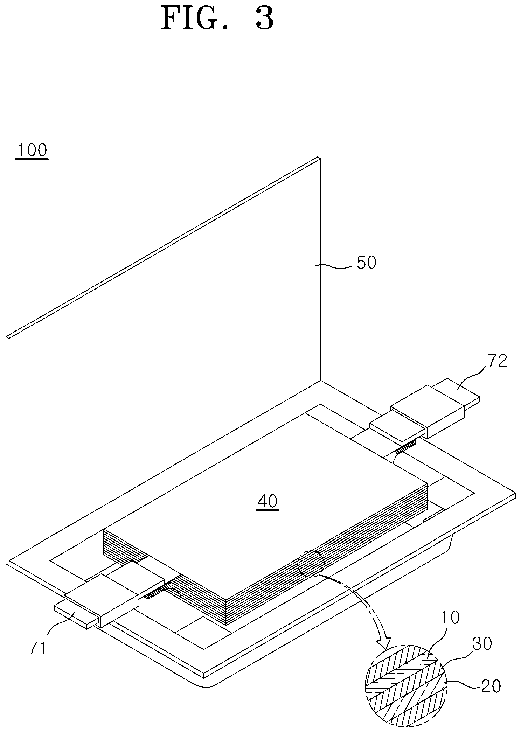

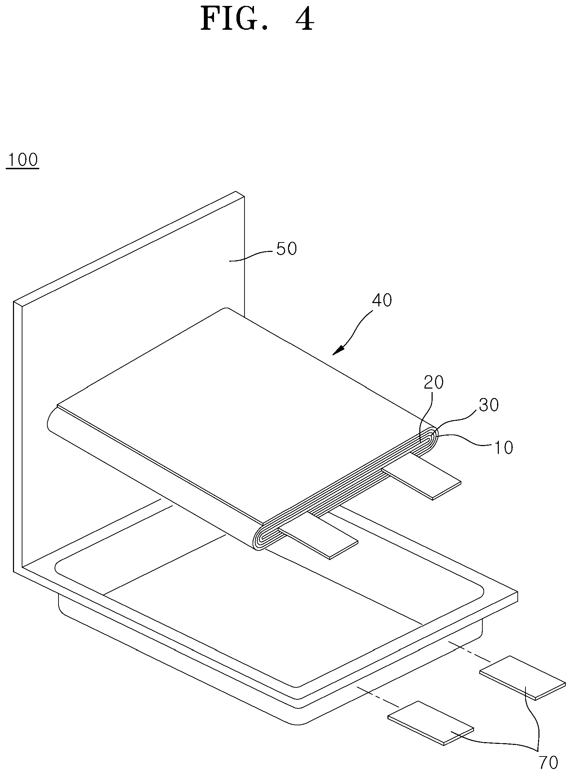

A lithium secondary battery may be referred to as a cylindrical secondary battery, a faceted secondary battery, a pouch type secondary battery, a coin type secondary battery, and the like based on its shapes. FIG. 1 to FIG. 4 are schematic views of lithium secondary batteries according to embodiments of the present disclosure. FIG. 1 shows a cylindrical secondary battery, FIG. 2 shows a faceted secondary battery, and FIG. 3 and FIG. 4 show pouch-type secondary batteries. Referring to FIGS. 1 to 4, a lithium secondary battery 100 may include an electrode assembly 40 in which a separator 30 is interposed between a cathode 10 and an anode 20, and a case 50 that accommodates the electrode assembly 40 therein. The cathode 10, the anode 20, and the separator 30 may be embedded in an electrolyte (not shown). The lithium secondary battery 100 may include a sealing member 60 that seals the case 50, as shown in FIG. 1. In addition, as shown in FIG. 2, the lithium secondary battery 100 may include a cathode lead tab 11, a cathode terminal 12, an anode lead tab 21, and an anode terminal 22. As shown in FIG. 3 and FIG. 4, the lithium secondary battery 100 may include electrode tabs 70, that is, a cathode tab 71 and an anode tab 72, which act as electrical pathways conducting current formed in the electrode assembly 40 to outside of the battery.

### Cathode material

As a cathode material, a compound allowing reversible intercalation and deintercalation of lithium (lithiated intercalation compound) may be used. Specifically, the cathode material may be at least one composite oxide of a metal selected from among cobalt, manganese, nickel and combinations thereof with lithium.

The composite oxide may be a lithium transition metal composite oxide. Specifically, the composite oxide may be a lithium nickel oxide, a lithium cobalt oxide, a lithium manganese oxide, a lithium iron phosphate compound, a cobalt-free nickel-manganese oxide, or a combination thereof.

By way of example, the composite oxide may be a compound represented by any of the following formulas: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li _{(3-f)}Fe₂ (PO₄)₃ (0≤f≤2); and LiₐFePO₄ (0.90≤a≤1.8). In these formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In an embodiment, the cathode material may be a high nickel-content cathode material containing 80 mol% or more, 85 mol% or more, 90 mol% or more, 91 mol% or more, or 94 mol% to 99 mol% of nickel relative to 100 mol% of metal excluding lithium in the lithium transition metal complex oxide. The high nickel-content cathode material can achieve high capacity and thus can be applied to high capacity/high density lithium secondary batteries.

### Cathode 10

The cathode 10 for the lithium secondary battery 100 may include a current collector and a cathode material layer formed on the current collector. The cathode material layer includes a cathode material and may further include a binder and/or a conductive material. In an embodiment, the cathode may further include an additive capable of acting as a sacrificial cathode.

The cathode material may be present in an amount of 90 wt% to 99.5 wt% based on 100 wt% of the cathode material layer. Each of the binder and the conductive material may be present in an amount of 0.5 wt% to 5 wt% based on 100 wt% of the cathode material layer.

The binder serves to attach cathode material particles to each other while attaching the cathode material to the current collector. The binder may include, for example, polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubbers, (meth)acrylated styrene-butadiene rubbers, epoxy resins, (meth)acrylic resins, polyester resins, nylon, and the like. But the present disclosure is not limited to these examples.

Alternatively, the binder may include any binder that becomes fibers under shear. For example, the binder may include polytetrafluoroethylene (PTFE), polyvinylidene fluoride (PVdF), vinylidene fluoride-hexafluoropropylene copolymer, polyacrylonitrile, polyolefin, or mixtures thereof.

The conductive material serves to impart conductivity to the electrodes and may be any electrically conductive material that does not cause chemical change in cells. The conductive material may include, for example, carbon materials, such as natural graphite, artificial graphite, carbon black, acetylene black, Ketjen black, carbon fiber, carbon nanofibers, carbon nanotubes, and the like; metal-based materials in the form of metal powders or metal fibers containing copper, nickel, aluminum, silver, and the like; conductive polymers, such as polyphenylene derivatives and the like; and mixtures thereof.

The current collector may be aluminum, without being limited thereto.

### Anode material

The anode material includes a material allowing reversible intercalation/deintercalation of lithium ions, lithium metal, a lithium metal alloy, a material capable of being doped to lithium and de-doped therefrom, or a transition metal oxide.

The material allowing reversible intercalation/deintercalation of lithium ions may include a carbon-based anode material, for example, crystalline carbon, amorphous carbon, or a combination thereof. The crystalline carbon may include, for example, graphite, such as natural graphite or artificial graphite, in amorphous, plate, flake, spherical, or fibrous form. The amorphous carbon may include, for example, soft carbon, hard carbon, mesoporous pitch carbides, calcined coke, and the like.

The lithium metal alloy may be an alloy of lithium and a metal selected from among Na, K, Rb, Cs, Fr, Be, Mg, Ca, Sr, Si, Sb, Pb, In, Zn, Ba, Ra, Ge, Al and Sn may be used.

The material capable of being doped to lithium and de-doped therefrom may be an Si-based anode material or an Sn-based anode material. The Si-based anode material may be silicon, a silicon-carbon composite, SiOₓ (0<x<2), Si-Q alloys or combinations thereof. In the formula Si-Q, Q is selected from among alkali metals, alkali-earth metals, Group XIII elements, Group XIV elements (excluding Si), Group XV elements, Group XVI elements, transition metals, rare-earth elements, and combinations thereof. The Sn-based anode material may be Sn, SnO₂, an Sn alloy, or a combination thereof.

The silicon-carbon composite may be a composite of silicon and amorphous carbon. According to an embodiment, the silicon-carbon composite may be prepared in the form of silicon particles having an amorphous carbon coating formed on the surfaces thereof. For example, the silicon-carbon composite may include secondary particles (cores) composed of primary silicon particles and an amorphous carbon coating layer (shell) formed on the surfaces of the secondary particles. The amorphous carbon may also be placed between the primary silicon particles such that, for example, the primary silicon particles are coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer formed on the core.

The Si-based anode material or the Sn-based anode material may be used in combination with the carbon-based anode material.

### Anode 20

The cathode 20 for the lithium secondary battery 100 may include a current collector and an anode active material layer formed on the current collector. The anode material layer includes an anode material and may further include a binder and/or a conductive material. The anode material layer may include, for example, 90 wt% to 99 wt% of the anode material, 0.5 wt% to 5 wt% of the binder, and 0 wt% to 5 wt% of the conductive material.

The binder serves to attach the anode material particles to each other while attaching the anode material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinylpyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

When the aqueous binder is used as the anode binder, a cellulose-based compound capable of imparting viscosity may be further included. The cellulose-based compound may be a mixture of carboxymethylcellulose, hydroxypropyl methylcellulose, methylcellulose, or alkali metal salts thereof. The alkali metal may be Na, K, or Li.

The dry binder may be a fibrous polymeric material and may include, for example, polytetrafluoroethylene, polyvinylidene fluoride, a polyvinylidene fluoride-hexafluoropropylene copolymer, polyethylene oxide, or a combination thereof.

The conductive material serves to impart conductivity to the electrodes and may be any electronically conductive material that does not cause chemical change in cells. Specifically, the conductive material may include, for example, carbon materials, such as natural graphite, artificial graphite, carbon black, acetylene black, Ketjen black, carbon fibers, carbon nanofibers, carbon nanotubes, and the like; metal-based materials in the form of metal powders or metal fibers containing copper, nickel, aluminum, silver, and the like; conductive polymers, such as polyphenylene derivatives and the like; or mixtures thereof.

The anode current collector may be selected from copper foil, nickel foil, stainless steel foil, titanium foil, nickel foam, copper foam, a conductive metal-coated polymer base, and combinations thereof.

### Electrolyte (not shown)

The electrolyte for the lithium secondary battery 100 includes a non-aqueous organic solvent and a lithium salt.

The non-aqueous organic solvent acts as a medium through which ions involved in electrochemical reaction of a cell can move. The non-aqueous organic solvent may be a carbonate-based solvent, an ester-based solvent, an ether-based solvent, a ketone-based solvent, an alcohol-based solvent, a non-amphoteric solvent, or a combination thereof.

The carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), and butylene carbonate (BC).

The ester-based solvents may include methyl acetate, ethyl acetate, n-propyl acetate, dimethyl acetate, methyl propionate, ethyl propionate, decanolide, mevalonolactone, valerolactone, caprolactone, and the like.

The ether-based solvents may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvents may include ethyl alcohol, isopropyl alcohol, and the like, and non-amphoteric solvent may include nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane; sulfolane; and the like.

The non-aqueous organic solvent may be used alone or as a mixture thereof.

In the carbonate-based solvent, a mixture of a cyclic carbonate and a chained carbonate may be used. The cyclic carbonate and the chained carbonate may be mixed in a volume ratio of 1:1 to 1:9.

The lithium salt is soluble in an organic solvent and serves as a source of lithium ions in a battery, enabling basic operation of a lithium secondary battery by facilitating transfer of the lithium ions between the cathode and the anode. Examples of the lithium salts may include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethane sulfonate, lithium difluorobis(oxalato)phosphate (LiDFOB), and lithium bis(oxalato)borate (LiBOB).

### Separators 30

Depending on the type of lithium secondary battery 100, a separator 30 may be interposed between the cathode 10 and the anode 20. For such a separator 30, polyethylene, polypropylene, polyvinylidene fluoride, or two or more layers thereof may be used as well as mixed layers, such as a polyethylene/polypropylene bilayer separator, a polyethylene/polypropylene/polyethylene trilayer separator, a polyethylene/polyethylene/polypropylene trilayer separator, and the like.

The separator 30 may include a porous base and a coating layer that includes an organic material, an inorganic material, or a combination thereof on one or both surfaces of the porous base.

The porous base may be a polymer layer formed of a polymer selected from among polyolefins, such as polyethylene polypropylene, and the like, polyesters, such as polyethylene terephthalate, polybutylene terephthalate, and the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, TEFLON^{®}, and polytetrafluoroethylene, copolymers thereof, or mixtures thereof.

The organic material may include a polyvinylidene fluoride polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof. But the present disclosure is not limited to these examples.

The organic material and the inorganic material may be present in a mixed state in one coating layer or may be present in the form of a stack structure of a coating layer including the organic material and a coating layer including the inorganic material.

With reference to FIGS. 1 to 4, the secondary batteries 100 according to the embodiments include the electrode assembly 40 and the case 50 in which the electrode assembly 40 is received. The electrode assembly 40 includes the cathode 10, the anode 20, and the separator 30 interposed between the cathode 10 and the anode 20. Here, the cathode 10 and/or the anode 20 will be referred to as an "electrode".

An electrode according to an embodiment includes an electrode sheet, which includes a base and an active material layer formed on the base.

The base is formed, for example, through a (current) collector. The base may be formed based on, for example, the type of electrode. When the electrode is the cathode 10, the base includes, for example, aluminum. When the electrode is the anode 20, the base includes at least one of, for example, copper foil, nickel foil, stainless steel foil, titanium foil, nickel foam, copper foam, a polymer base coated with a conductive metal, and combinations thereof. Examples of the bases are the same or similar to those described above.

The active material layer may be formed, for example, as a freestanding film with a dry layer and/or a slurry as a wet layer. The active material layer includes an active material. The active material may be determined depending on, for example, the type of electrode. Examples of the active material are the same or similar to those described with reference to FIG. 1 to FIG. 4. The active material layer may further include a binder and/or a coating material. Examples of the binder and/or the coating material are the same or similar to those described above.

Such an electrode is formed by rolling an electrode sheet. Rolling of the electrode sheet determines the degree of adhesion between the base and the active material layer, the degree of salt precipitation, the degree of impregnation with an electrolyte, charge/discharge efficiency, and the like. Thus, electrodes with high efficiency can be manufactured by properly controlling a rolling operation of the electrode sheet. The electrodes with high efficiency include, for example, electrodes with suitable surface roughness, impregnation time, salt precipitation area, presence of patterns, and the like.

Hereinafter, an electrode manufacturing apparatus 200 according to an embodiment of the present disclosure will be described in detail.

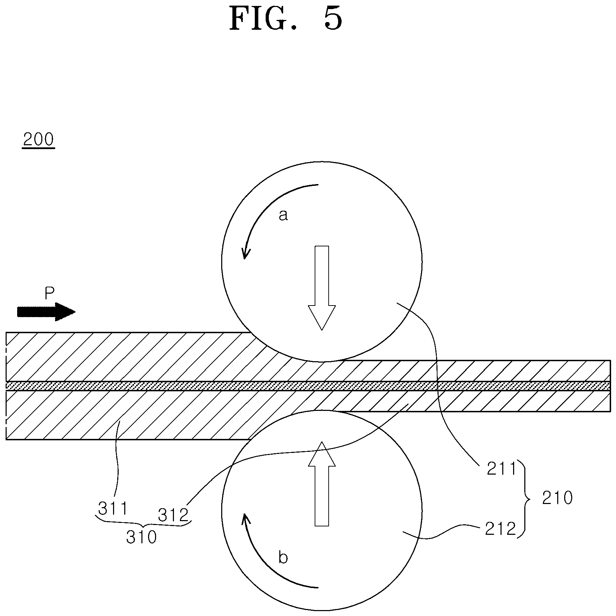

FIG. 5 is a schematic view of an electrode manufacturing apparatus according to an embodiment of the present disclosure.

The electrode manufacturing apparatus 200 according to an embodiment rolls an electrode sheet 310. By such rolling operation, the electrode manufacturing apparatus 200 can manufacture electrodes with high efficiency and/or can reduce a process time for manufacturing an electrode.

The electrode manufacturing apparatus 200 includes press rolls 210. The press rolls 210 include, for example, a pair of press rolls, that is, a first roll 211 and a second roll 212. The first roll 211 and the second roll 212 are spaced apart from each other. The press rolls 210 roll the electrode sheet 310 by applying force to the electrode sheet 310 passing through a gap between the first roll 211 and the second roll 212.

The pressure applied to the electrode sheet 310 by controlling the gap between the first roll 211 and the second roll 212. For example, to increase the pressure applied to the electrode sheet 310, the gap between the first roll 211 and the second roll 212 may be reduced. Alternatively, in order to decrease the pressure applied to the electrode sheet 310, the first roll 211 and the second roll 212 may be moved farther apart.

A straight line connecting a center of the first roll 211 to a center of the second roll 212 may be perpendicular to a traveling direction P of the electrode sheet 310.But in other embodiments, in arrangement of subsequent processes applied to the electrode sheet 310 the straight line connecting the center of the first roll 211 to the center of the second roll 212 may not be perpendicular to the traveling direction P of the electrode sheet 310.

The first roll 211 and the second roll 212 rotate in opposite directions. For example, the first roll 211 rotates in a first direction a and the second roll 212 rotates in a second direction b, with the second direction b being opposite to the first direction a. For example, when the first direction a is the counterclockwise direction, the second direction b is the clockwise direction, or vice-versa. Here, the first direction a and the second direction b may be the same as the traveling direction of the electrode plate 310 at a portion where the first roll 211 and the second roll 212 contact the electrode plate 310.

In addition, the electrode manufacturing apparatus 200 may further include a conveying unit (not shown). The conveying unit conveys the electrode sheet 310. For example, the conveying unit conveys the electrode sheet 310 from an external device toward the electrode manufacturing apparatus 200. The conveying unit may further convey the electrode sheet 310 between components inside the electrode manufacturing apparatus 200. And the conveying unit may convey the electrode sheet 310 from the electrode manufacturing apparatus 200 toward an external device.

In embodiments, the conveying unit conveys a pre-rolled electrode sheet 311 to the gap between the first roll 211 and the second roll 212. The conveying unit may be embodied, for example, in the form of a roller spaced apart from the press rolls 210. However, the conveying unit is not limited thereto and may have any form, such as a conveyor and the like, which can convey the electrode sheet 310. Also, the conveying unit may convey the electrode sheet 312 from the press rolls 210 after the electrode sheet 312 is rolled by the press rolls 210.

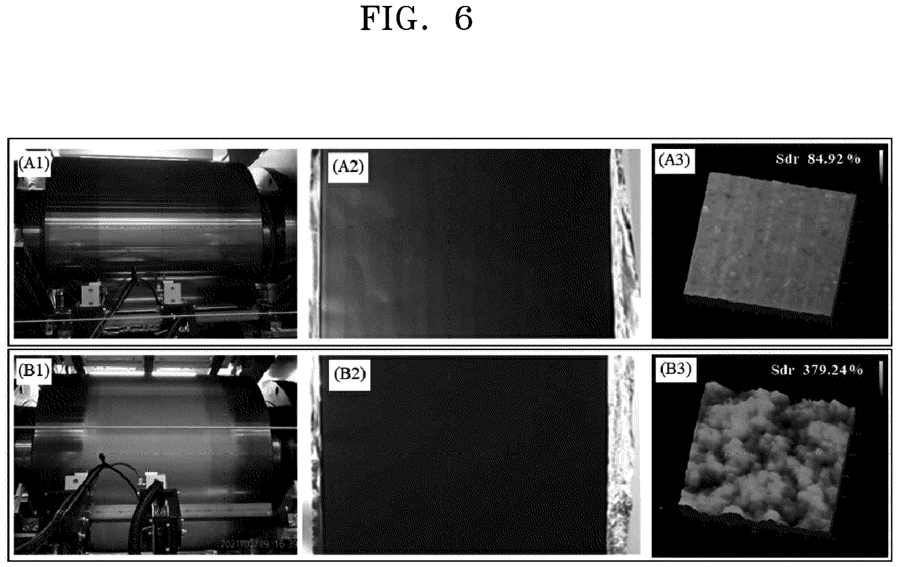

As such, the electrode manufacturing apparatus 200 can manufacture an electrode by rolling the electrode sheet 310 through the press rolls 210. Here, as force (e.g., a shear force) is applied to the electrode sheet 310, a surface of the press roll 210 is worn. As such, the surface of the press rolls 210 may have a step between a used portion and an unused portion thereof. In such a case, there can be a problem of breakage of the electrode sheet 310 during a rolling process and/or unevenness in the thickness of the manufactured electrode. Accordingly, the press rolls 210 must periodically be replaced. However, when the press rolls 210 are replaced, there is a problem in that surface roughness Ra of the press rolls 210 changes. This problem will be described with reference to FIG. 6.

FIG. 6 is views showing conventional electrode manufacturing apparatuses and surfaces of electrodes manufactured thereby. In FIG. 6, (A1) illustrates a first press roll (hereinafter referred to as "conventional first press roll") included in a conventional electrode manufacturing apparatus. Here, the first conventional press roll 1 has just been installed (replacing a prior press roll), for example, and the first conventional press roll has a driving distance (i.e., the distance that a point on the surface of the press roll has traveled) of 10 km or less. The conventional first press roll has an average surface roughness Ra of about 0.1 µm.

The average surface roughness Ra (in the following also simply referred to "surface roughness") may be measured by DIN EN ISO 4288.

In FIG. 6, (A2) shows surface morphology of an electrode (hereinafter referred to as "first conventional electrode") manufactured by the first conventional press roll. As shown in (A2) of FIG. 6, the surface of the conventional electrode is glossy.

In FIG. 6, (A3) shows surface morphology of the conventional electrode. From (A3) of FIG. 6, it could be seen that the first conventional electrode has an 84.92% increased surface area.

In FIG. 6, (B1) shows a press roll (hereinafter referred to as "second conventional press roll ") included in a conventional electrode manufacturing apparatus. The second conventional press roll has a driving distance of about 4,500 km and an average surface roughness Ra of about 0.7 µm. Here, the second conventional press rolls 2 had an average surface roughness Ra of about 0.1 µm at a driving distance of 10 km.

In FIG. 6, (B2) shows surface morphology of an electrode (hereinafter referred to as "second conventional electrode") manufactured by the second conventional press roll. As shown in (B2) of FIG. 6, it could be seen that the surface of the second conventional electrode was not glossy.

In FIG. 6, (B3) shows surface morphology of the second conventional electrode. From (B3) of FIG. 6, it could be seen that the second conventional electrode has 379.24% increased surface area.

It can be seen from FIG. 6 that surface roughness of an electrode (for example, the first conventional electrode)s upon rolling with press rolls with low surface roughness (for example, the first conventional press roll). Electrodes with lower surface roughness have a lower impregnation rate and secondary batteries including such electrodes suffer from insufficient impregnation in a given impregnation time. As a result, there can be a problem of quality degradation, such as salt precipitation.

To solve such problems, conventionally, electrodes with low surface roughness are impregnated with an electrolyte for a longer period of time to ensure sufficient impregnation. But such a process is inefficient. For example, the process time increases as the impregnation time increases immediately after replacement of the press roll. In addition, the costs of the process increase as an additional process must be carried out.

Next, an apparatus and method for producing electrodes with high quality while reducing process time for controlling an impregnation will be described.

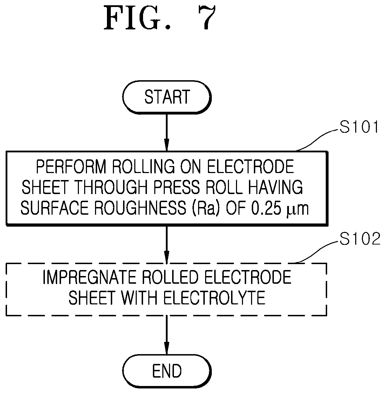

FIG. 7 is a flowchart illustrating an electrode manufacturing method according to an embodiment of the present disclosure.

As described above in FIG. 5, the electrode manufacturing apparatus 200 according to embodiments includes the press rolls 210. In the following description of the electrode manufacturing apparatus 200, the same or similar features as in the electrode manufacturing apparatus 200 described in FIG. 5 will be omitted.

The press rolls 210 may include a coating layer on the surface thereof to prevent abrasion of the press roll 210 while increasing lifetime of the press rolls 210. The coating layer may include, for example, tungsten carbide, DLC, and the like. In addition, the press roll 210 coated with the coating layer may be subjected to processing (including, for example, polishing) to maintain an original shape thereof.

The press rolls 210 according to an embodiment require less processing thereon in order to increase initial roughness. To this end, for example, the electrode manufacturing apparatus 200 according to the embodiment includes press rolls 210 having an average surface roughness Ra of 0.25 µm or more measured by DIN EN ISO 4288. Here, the surface roughness Ra is a value measured when the press rolls 210 have a driving distance of 10 km or less. Within this range, the press rolls 210 require less machining to be performed thereon, thereby increasing initial roughness of the press rolls 210.

In other embodiments, the electrode manufacturing apparatus 200 may include press rolls 210 having a surface roughness Ra of 0.30 µm or more. Here, the surface roughness Ra is measured when the press rolls 210 have a driving distance of 10 km or less. Within this range, the press rolls 210 require less machining to be performed thereon, thereby increasing initial roughness of the press rolls 210.

On the other hand, the press rolls 210 may be subjected to too little machining. In such a case, the press rolls 210 cannot maintain their original shape. Thus, the press rolls 210 according to embodiments of the present disclosure may include a press roll 210 having a surface roughness Ra of 0.7 µm or less. Here, the surface roughness Ra is measured when the press rolls 210 have a driving distance of 10 km or less.

In example embodiments, the press rolls 210 may have a surface roughness Ra of 0.25 µm to 0.7 µm. In other embodiments, the press rolls 210 may have a surface roughness Ra of 0.25 µm to 0.65 µm, a surface roughness Ra of 0.30 µm to 0.70 µm, a surface roughness Ra of 0.30 µm to 0.65 µm, a surface roughness Ra of 0.25 µm to 0.60 µm, a surface roughness Ra of 0.25 µm to 0.55 µm a surface roughness Ra of 0.30 µm to 0.60 µm, or a surface roughness Ra of 0.30 µm to 0.55 µm.

As such, with the press rolls 210 having a surface roughness Ra of 0.25 µm or more at a driving distance of less than 10 km, the electrode manufacturing apparatus 200 according to the embodiment can ensure that the electrode sheet 310 has a high surface roughness Ra even immediately after the press roll 210 is installed. Further, the electrode manufacturing apparatus 200 according to the embodiment can improve impregnability of the electrode sheet 310 subjected to rolling and/or can reduce a salt precipitation area.

The electrode manufacturing method according to the embodiment may be realized through the electrode manufacturing apparatus 200, as shown in FIG. 7.

The electrode manufacturing method according to the embodiment includes the step of rolling an electrode sheet through press rolls having a surface roughness Ra of 0.25 µm or more (S101). The surface roughness Ra refers to the surface roughness of the press rolls 210 when the press rolls 210 have a driving distance of 10 km or less. In other embodiments, the electrode manufacturing method may include rolling an electrode sheet through the press rolls having a surface roughness Ra of 0.25 µm to 0.70 µm, rolling an electrode sheet through the press rolls having a surface roughness Ra of 0.30 µm or less, or rolling an electrode sheet through the press rolls having a surface roughness Ra of 0.30 µm to 0.70 µm.

The electrode sheet is prepared by forming an active material layer including a complex oxide of lithium and at least one metal selected from cobalt, manganese, nickel, and combinations thereof on a current collector.

The electrode manufacturing method according to an embodiment may further include the step of impregnating the rolled electrode sheet 312 with an electrolyte by injecting the electrolyte into the rolled electrode sheet 312 (S102). Here, the step of impregnating the electrode sheet 312 includes impregnating the rolled electrode sheet 312 with the electrolyte for 3 hours or less. As described above, the electrode manufacturing method can ensure that the electrode sheet 312 has a high surface roughness Ra even after rolling immediately after replacement of the press rolls 210. Accordingly, the electrode manufacturing method can reduce the impregnation time for the electrode sheet 312. For example, the electrode sheet 312 may be sufficiently impregnated with the electrolyte in a time of 3 hours or less. Alternatively, for example, the electrode sheet 312 may be sufficiently impregnated with the electrolyte in a time of 2.9 hours or less, may be sufficiently impregnated in a time of 2.8 hours or less, may be sufficiently impregnated in a time of 2.7 hours or less, or may be sufficiently impregnated with the electrolyte in a time of 2.6 hours or less.

The electrode manufacturing apparatus 200 and the electrode manufacturing method capable of manufacturing electrodes with high efficiency even after replacement of the press rolls 210 have been described above. In the following description, the excellent performance of electrodes manufactured by the electrode manufacturing apparatus 200 and/or the electrode manufacturing method according to the embodiments and an electrode according to an embodiment will be described.

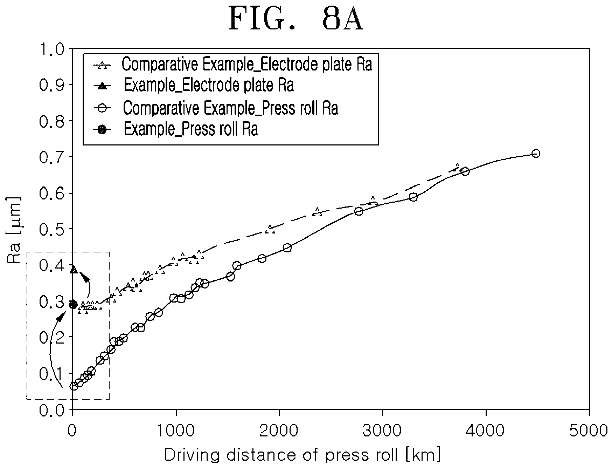

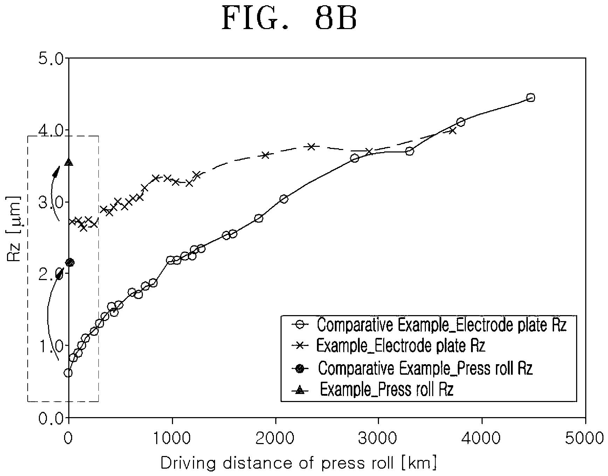

FIG. 8A and FIG. 8B are graphs depicting surface roughness (Ra, Rz) of press rolls and electrodes for a conventional electrode manufacturing apparatus and an electrode manufacturing apparatus according to an embodiment of the present disclosure.

In FIG. 8A shows surface roughness Ra of press rolls and electrodes (or electrode plates) according to the related art and according to an embodiment of the present disclosure. Here, surface roughness Ra represents centerline average surface roughness measured along a surface centerline. In FIG. 8A, conventional press rolls (comparative example_press rolls) have a surface roughness Ra of 0.1 µm or less at a driving distance of 10 km or less. An electrode (comparative electrode plate) rolled by the conventional press rolls has a surface roughness Ra of 0.1 µm or less. The press rolls 210 (example_press roll) according to the embodiment have a surface roughness Ra of 0.3 µm at a driving distance of 10 km or less. An electrode (example electrode plate) rolled by the press rolls 210 according to the embodiment has a surface roughness Ra of 0.4 µm or less.

In FIG. 8B, shows surface roughness Rz of press rolls and electrodes (or electrode plates) according to the related art and an embodiment of the present disclosure. Here, surface roughness Rz represents ten-point average surface roughness, as measured at ten points on the surfaces of the press rolls and the electrodes. The conventional press rolls (comparative example_press roll) have a surface roughness Rz of 1.0 µm or less at a driving distance of 10 km or less. Ann electrode (comparative electrode plate) rolled by the conventional press rolls has a surface roughness Rz of 1.0 µm or less. The press rolls 210 (example_press roll) according to the embodiment have a surface roughness Rz of 2.0 µm or more at a driving distance of 10 km or less. An electrode (example_electrode plate) rolled by the press rolls 210 according to the embodiment has a surface roughness Rz of about 3.2 µm or more.

As can be seen from FIG. 8A and FIG. 8B, the electrodes manufactured by the electrode manufacturing apparatus 200 according to embodiments of the present disclosure, which includes the press rolls 210 with increased initial roughness, have increased surface roughness (Ra, Rz) compared to the conventional electrodes.

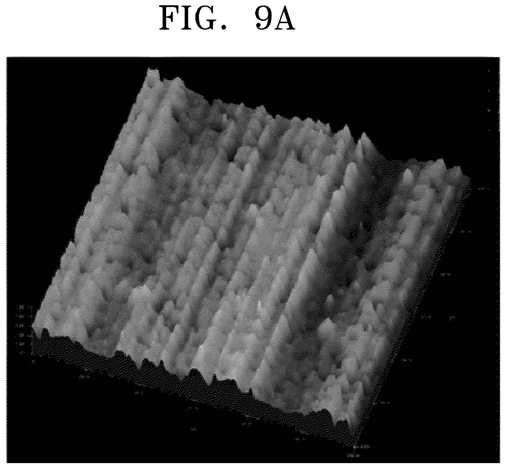

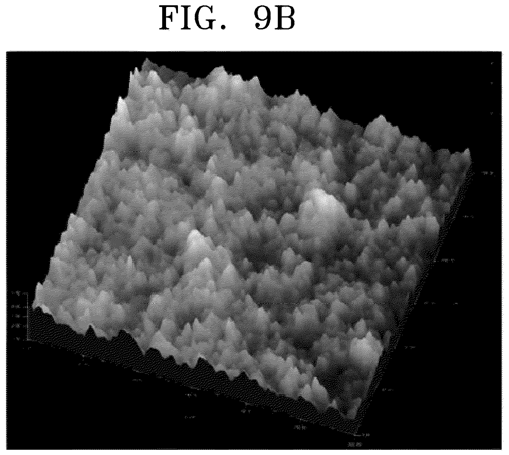

FIG. 9A and FIG. 9B are pictures showing surfaces of a conventional electrode plate and an electrode plate according to an embodiment of the present disclosure, which have similar surface roughness.

FIG. 9A shows a surface of an electrode sheet rolled through the press roll 210 according to the embodiment of the present disclosure described with reference to FIG. 8A and/or FIG. 8B. The press rolls 210 had a driving distance of 10 km or less and an initial surface roughness Ra of 0.3 µm.

As can be seen from FIG. 9A, the electrode according to the embodiment has a predetermined pattern. The predetermined pattern is formed, for example, side by side in one direction. In other embodiments, the predetermined pattern may be formed, for example, in a net shape. The net shape is formed, for example, by first straight lines formed at a first angle and second straight lines formed at a second angle and crossing the first straight lines. Here, the first angle and the second angle are different from each other. Alternatively, the predetermined pattern includes, for example, a pattern with grooves formed at regular intervals.

The electrode according to the embodiment has a surface roughness Ra of 0.35 µm or more, as measured on the surface of the electrode sheet that is subj ected to rolling. The electrode according to the embodiment has a salt precipitation area of 0.20% or less, as measured on the surface of the electrode sheet thereof subjected to rolling.

FIG. 9B shows a surface of an electrode sheet rolled through the conventional press rolls described above with reference to FIG. 5. Here, the press roll 210 had a driving distance of about 4,000 km and an initial surface roughness Ra of 0.7 µm or more. As can be seen from FIG. 9B, the conventional electrode has a randomly roughened surface that is not formed a regular pattern.

As can be seen from FIG. 9A and/or FIG. 9B, the electrode manufacturing apparatus and/or the electrode manufacturing method according to embodiments of the present disclosure can manufacture electrodes with high surface roughness Ra even when the press rolls 210 have a short driving distance. Furthermore, the electrode manufacturing apparatus and/or the electrode manufacturing method according to embodiments of the present disclosure can manufacture an electrode having a pattern on a surface thereof. Accordingly, the electrode manufactured according to embodiments of the present disclosure and the secondary battery 100 including the electrode can be manufactured through a highly efficient process have improved charge/discharge performance.

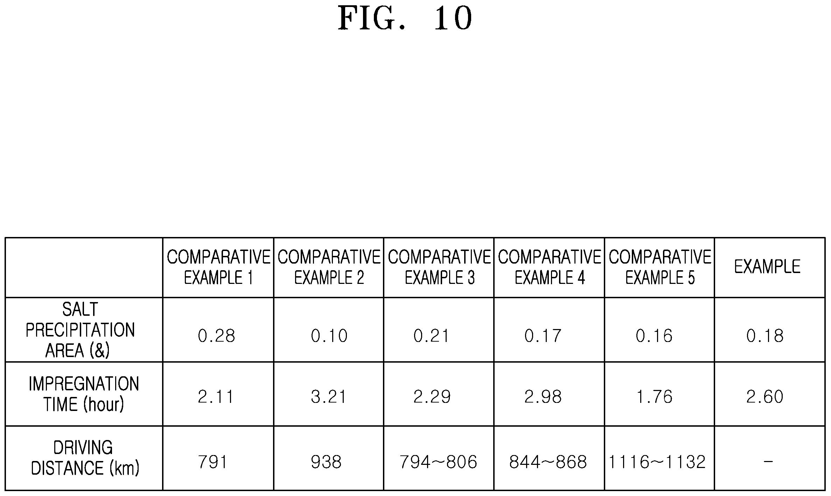

FIG. 10 is a table comparing performance of a conventional electrode manufacturing apparatus and an electrode manufacturing apparatus according to an embodiment of the present disclosure. Comparative Examples 1 to 5 are electrodes manufactured by an electrode manufacturing apparatus including press rolls having an initial surface roughness Ra of about 0.1 µm.

In Comparative Example 1, the press rolls used to roll the electrode sheet had a driving distance of 791 km. In Comparative Example 2, the press rolls had a driving distance of 938 km. In Comparative Example 3, the press rolls had a driving distance in the range of 794 km to 806 km. In Comparative Example 4, the press rolls had a driving distance of 844 km to 868 km. In Comparative Example 5, the press rolls had a driving distance of 1,116 km to 1,132 km.

In the Example shown in FIG. 10, the electrode was manufactured through the press rolls 210 according to embodiments of the present disclosure. In this example, the press rolls 210 had a driving distance of 10 km or less and a surface roughness Ra of 0.3 µm.

From FIG. 10, it can be seen that the electrode of Example had a similar and/or shorter impregnation time, despite the press rolls having a much shorter driving distance than the driving distances of the press rolls of Comparative Examples 1 to 5. It can also be seen that the electrode of Example had a similar and/or smaller salt precipitation area (%) as the electrodes of Comparative Examples 1 and 2. In particular, it can be seen that the electrode of Example had a similar salt precipitation area to the electrodes of Comparative Example 4 or 5 at a driving distance of over 800 km and/or a similar impregnation time to the electrodes of Comparative Examples 2 to 4 at a driving distance of greater than 700 km. Thus, it can be seen that the electrode manufacturing apparatus 200 according to the embodiment includes the press rolls 210 with increased initial surface roughness Ra, thereby providing similar or better effects than press rolls having a driving distance of 700 km or more even immediately after replacement.

Further, as illustrated with reference to FIG. 9A, FIG. 9B, and FIG. 10, it can be seen that electrodes manufactured using the press rolls 210 have excellent performance with a salt precipitation area of 0.20% or less and/or an impregnation time of 3 hours or less. Further, the electrodes according to the embodiments of the present disclosure have a predetermined pattern on the surface thereof, thereby providing further improved performance.

## Claims

1. An electrode manufacturing apparatus (200) comprising
a press roll (210) having an average surface roughness Ra of 0.25 µm or more measured by DIN EN ISO 4288, the press roll being configured to roll an electrode sheet.

2. The electrode manufacturing apparatus (200) according to claim 1, wherein the press roll (210) has a driving distance of 10 km or less.

3. The electrode manufacturing apparatus (200) according to claim 1 or 2, wherein the press roll (210) has an average surface roughness Ra of 0.7 µm or less.

4. The electrode manufacturing apparatus according to any one of the preceding claims, wherein the press roll is configured to form a predetermined pattern in the electrode sheet.

5. The electrode manufacturing apparatus according to any one of the preceding claims, wherein the press roll is configured to roll the electrode sheet such that the electrode sheet is provided with a surface roughness Ra of 0.35 µm or more.

6. An electrode manufacturing method comprising:
rolling an electrode sheet using the electrode manufacturing apparatus (200) according to any one of the preceding claims.

7. The electrode manufacturing method according to claim 6, further comprising impregnating the rolled electrode sheet with an electrolyte for 3 hours or less.

8. The electrode manufacturing method according to claim 6 or 7, further comprising, further comprising forming the electrode sheet by forming an active material layer comprising an active material on a current collector, the active material comprising a composite oxide of lithium and at least one of cobalt, manganese, nickel, and combinations thereof.

9. A secondary battery (100) comprising:
an electrode assembly (40) comprising an electrode manufactured by the electrode manufacturing method according to any one of claims 6 to 8; and
a case (50) receiving the electrode assembly therein.

10. The secondary battery according to claim 9, wherein the electrode has a predetermined pattern on a surface thereof.

11. The secondary battery according to claim 9 or 10, wherein the electrode has a surface roughness Ra of 0.35 µm or more.

12. The secondary battery according to any one of the claims 9 to 11, wherein the electrode has a salt precipitation area of 0.20% or less.

13. The secondary battery according to any one of the claims 9 to 12, wherein the electrode assembly (40) comprises a cathode (10), an anode (20), and a separator (30) interposed between the cathode and the anode, and the electrode comprises the cathode.

14. The secondary battery according to any one of the claims 9 to 13, wherein the electrode is impregnated with an electrolyte for 3 hours of less.
